(19) Europäisches Patentamt
European Patent Office
Office européen des brevets

(11) **EP 2 685 308 B1**

(12) # EUROPEAN PATENT SPECIFICATION

(45) Date of publication and mention
of the grant of the patent:
**24.10.2018 Bulletin 2018/43**

(51) Int Cl.:
**G02F 1/35** (2006.01)      **H01Q 9/00** (2006.01)

(21) Application number: **12176226.4**

(22) Date of filing: **12.07.2012**

(54) **Photomixer for continuous wave terahertz generation**

Photomischer für ununterbrochene Terahertz-Wellenerzeugung

Mélangeur optique pour la génération de térahertz à onde continue

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2014 Bulletin 2014/03**

(73) Proprietor: **Technische Universität Darmstadt
64285 Darmstadt (DE)**

(72) Inventors:
• **Al-Daffaie, Shihab
64287 Darmstadt (DE)**
• **Yilmazoglu, Oktay
64846 Groß-Zimmern (DE)**
• **Küppers, Franko
64289 Darmstadt (DE)**
• **Hartnagel, Hans
64397 Ernsthofen (DE)**

(74) Representative: **2K Patentanwälte Blasberg
Kewitz & Reichel
Partnerschaft mbB
Schumannstrasse 27
60325 Frankfurt am Main (DE)**

(56) References cited:
WO-A2-2011/030011      US-A1- 2008 217 542
US-A1- 2008 251 704

• CHRISTOPHER W BERRY ET AL:
"Plasmonically-enhanced localization of light
into photoconductive antennas", CONFERENCE
ON LASERS AND ELECTRO-OPTICS (CLEO) AND
QUANTUM ELECTRONICS AND LASER SCIENCE
CONFERENCE (QELS), 2010 : 16 - 21 MAY 2010,
SAN JOSE, CA, USA, IEEE, PISCATAWAY, NJ ,
USA, 16 May 2010 (2010-05-16), pages 1-2,
XP031701242, ISBN: 978-1-55752-890-2
• LIANGBING HU ET AL: "Metal nanogrids,
nanowires, and nanofibers for transparent
electrodes", MRS BULLETIN, vol. 36, no. 10, 1
October 2011 (2011-10-01), pages 760-765,
XP55051169, ISSN: 0883-7694, DOI:
10.1557/mrs.2011.234
• H.TANOTO; J. TEHNG; Q. WU; M. SUN; Z.CHEN;
S. MAIER; B.WANG; C. CHUM; G. SI; A. DANNER:
"Greatly enhanced continuous- wave terahertz
emission by nanoelectrodes in a
photoconductive photo mixer", NATURE
PHOTONICS, vol. 6, 2012, XP002691134,
• PEYTAVIT E ET AL: "Terahertz frequency
difference from vertically integrated
low-temperature-grown GaAs photodetector",
APPLIED PHYSICS LETTERS, AIP, AMERICAN
INSTITUTE OF PHYSICS, MELVILLE, NY, US, vol.
81, no. 7, 12 August 2002 (2002-08-12), pages
1174-1176, XP012033217, ISSN: 0003-6951, DOI:
10.1063/1.1499517

EP 2 685 308 B1

**Description**

The invention generally relates to photomixers for continuous wave terahertz generation. In particular, the invention relates to the using of a Nanowire for reducing the capacity between a top and bottom contact, between which a layer of photoconductive (PC) material is situated. The new device can additionally use the field enhancement effect in nanosized electrodes to keep the photocurrent high see reference [6] given below.

Normal photomixers, especially vertical photomixers, show a vertical layer structure or sandwich structure, where the photoconductive (PC) material is located between a first top electrode, mostly a transparent electrode, and a bottom contact.

THz applications is wide and fast growing field in biology, medicine, imaging, material spectroscopy, security and many other application fields.

Photomixers are mainly used for CW THz sources. The classical photomixing approach is the pumping of a planar low-temperature-grown (LTG) GaAs by the laser beat signal. The planar photomixer can be naturally integrated to a planar antenna. These classical photomixers have limitations with regard to laser power, photocurrent, bias voltage, and the effective local heat dissipation [1], which cuts the THz output power.

It is therefore the object of the invention to suggest an improved photomixer as such and especially for the usage in combination as a CW THz sources.

Another object of the invention is to improve the photomixer electrode configuration of a dc bias top contact, and a laser illuminated PC material in contact with the top contact and a bottom contact.

The present invention solves these objects.

The new vertical photomixer structure consists of a LTG-GaAs (also applicable for many other photoswitches grown by low-temperature grown as LTG-(In)GaAsSb, and nitrogen implanted GaAs) and sandwiched between two electrodes plates similar to [2] transferred onto a high-thermal-conductivity Si substrate (or Diamond or any other high-thermal-conductivity substrate). The top electrode can be an optically transparent and electrically conductive material like ITO [3] or nanowires formed into a grid structure.

This standalone photomixer matches well with a suitable antenna to achieve the maximum THz output power. The THz power can be calculated from the simplified equation (1) given below as $P(\omega)$ [4]:

$$P(\omega) = I^2_0 R_A / 2[1+(\omega\tau_c)^2][1+(\omega R_A C)^2] \qquad (1)$$

where $I_0$ (= $GV_0$) is the photocurrent, G is the DC photoconductance, $V_0$ is the bias DC voltage, $R_A$ is the antenna resistance, $\tau_c$ is the carrier life time, and C is the device capacitance. The advantages of the vertical photomixer configuration are higher photocurrent, higher laser power due to better heat dissipation in Si substrate and increased output power. The device capacitance C is critical for the cut-off frequency (equation 1) and has to be designed as small as possible (at given photocurrent) to enhance the output power. The application of a flexible and transparent nanogrid top-electrode like nanowires, nanotubes or carbon nanotubes CNT [5] decreases the device capacitance. These grid electrodes can further supply photocurrents (for a given area) similar to parallel-plate configuration using the field enhancement between electrodes with Nanogap separation as shown recently in [6] .

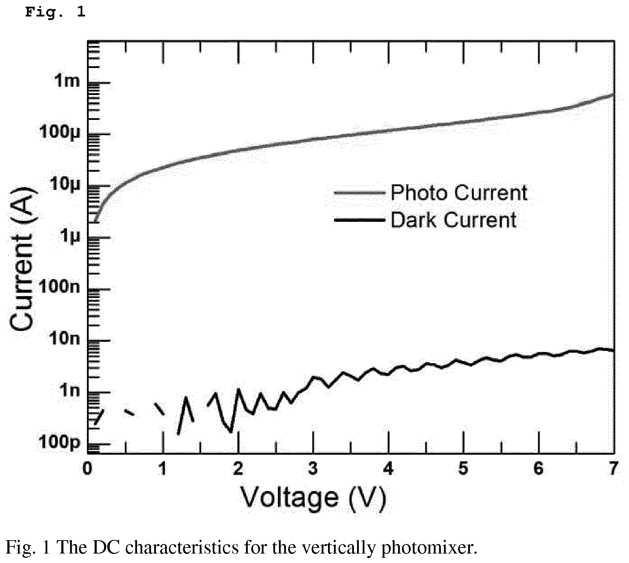

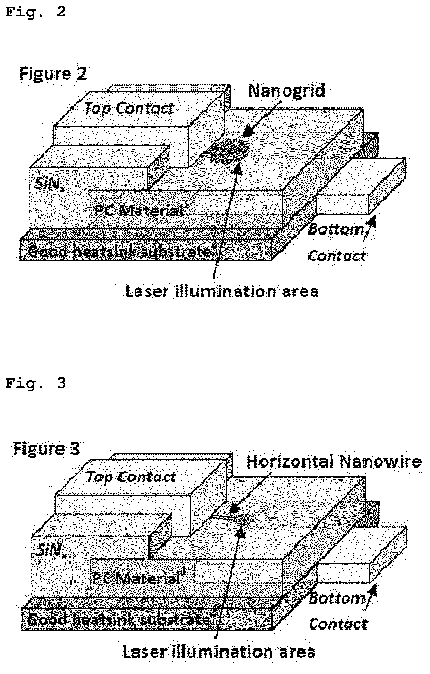

A new Nanogrid vertical photomixer structure was fabricated on ~500 nm thick LTG-GaAs on Si substrate similarly to (Fig.2). Relatively high photocurrents of more than 0.8 mA were achieved with small dark currents of ~200 nA. A large On/Off photocurrent ratio was measured with a small Nanogrid contact on the top even for low bias voltages ~7 V (see Fig.1).

The potential increase in output power is large since the available power is proportional $I_0^2$ according to the THz power equation (equation 1).

The nanogrid photomixer has less effective area than vertical photomixer with parallel-plate configuration, which will strongly increase the output power according to equation 1. The photomixer impedance can be matched better to a resonant antenna with higher impedance than a spiral antenna.

The present invention and its advantages and further, preferred embodiments, will become more apparent, when looking at the following description of possible embodiments of the invention, which will be described with reference to the accompanying figures, which are showing:

Fig. 1: the results of measurements with the photomixer as described above;
Fig. 2: the design of an embodiment with a nanogrid (nanowire grid) in connection with the top contact;
Fig. 3: a second embodiment, using a horizontal nanowire instead of a nanogrid;
Fig. 4: a third embodiment, using an aligned nanowire and another configuration of contact area between the top contact and the passivation layer (here with SiNx as one of the possible materials); the passivation layer used to isolate the top contact from the PC material to avoid any additional interaction between the top and bottom contacts and that keeps the interaction only between the top Nanostructure and the bottom contact.

Fig. 5: a fourth, and yet preferred embodiment, using a vertical nanowire;

In Fig. 1 the advantages (approx. 0.8 mA) of the nanogrid are shown.

Figure 2 shows the Nanogrid (Nanowire Grid) electrode as a top dc bias for vertical photomixer. The top contact connects the Nanogrid to the dc source and it is isolated from PC material by passivation layer like SiNx. The photomixer capacitance C is small comparing to the normal photomixer because of the small interaction area between the top Nanogrid and bottom contact. Nanogrid device can offer the same photocurrent $I_0$ like the normal vertical photomixer or even higher with less laser illumination area. The less capacitance C with the same photocurrent $I_0$ or higher generate higher THz power $P(\omega)$ according to equation 1.

Figure 3 shows a single Nanowire horizontally connected to the PC material as a top dc bias electrode for vertical photomixer. The top contact connects the single Nanowire to the dc source and it is isolated from PC material by passivation layer like SiNx. The photomixer capacitance C is smaller comparing to the Nanogrid photomixer because of the smaller interaction area between the top Nanowire and bottom contact. Horizontal Nanowire device can offer the same photocurrent 10 like the Nanogrid vertical photomixer or even higher with less laser illumination area. The less capacitance C with the same photocurrent $I_0$ or higher generate higher THz power $P(\omega)$ according to equation 1.

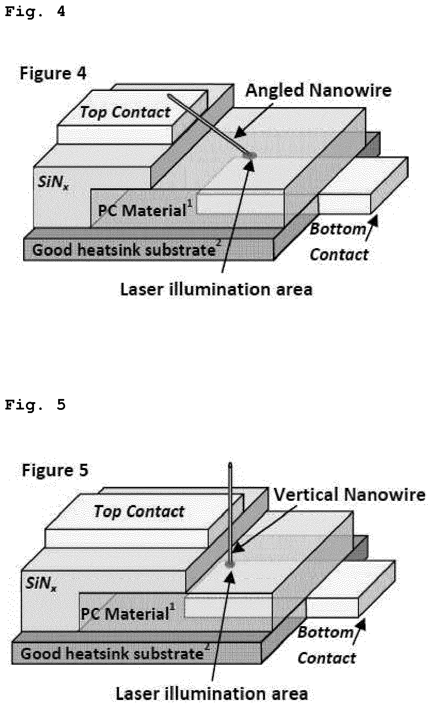

Figure 4 shows a single Nanowire tip connects by a certain angle to the PC material as a top dc bias electrode for vertical photomixer. The top contact connects the Nanowire to the dc source and it is isolated from PC material by passivation layer like SiNx. The photomixer capacitance C is much smaller comparing to the Horizontal Nanowire photomixer because of the smallest interaction area between the top Nanowire and bottom contact. Angled Nanowire device can offer the same photocurrent $I_0$ like the Horizontal Nanowire vertical photomixer or even higher with less laser illumination area. The less capacitance C with the same photocurrent 10 or higher generate much higher THz power $P(\omega)$ according to equation 1.

Figure 5 shows a single Nanowire perpendicularly connected to the PC material as a top dc bias electrode for vertical photomixer. The top contact connects the Nanogrid to the dc source and it is isolated from PC material by passivation layer like SiNx. The photomixer capacitance C is the smallest value comparing to any other type above because of the smallest interaction area (it is only the Nanowire cross section area) between the top Nanowire and bottom contact. The Vertical Nanowire device can offer the same photocurrent 10 like any other types or even higher with much less laser illumination area. The smallest capacitance C with the same photocurrent 10 or higher generate very much higher THz power $P(\omega)$ according to equation 1.

The PC Material is any photoconductive Material can be used as photoswitch for mm-Wave or THz generation or detection like LTG-GaAs, nitrogen-ion-implanted GaAs (N+iGaAs) or any other related material.

The good heatsink substrate layer like non-conductive CVD diamond or any like Si, GaAs, etc...

The contact area size of the used nano wire (i.e. the contact area with the PC material) is corresponding to a diameter of around 100nm down to around 1nm, preferred are diameters from around 90 down to 10nm, and especially preferred are 80 to 60nm, and 60 down to 10nm and from 10 down to 1nm, depending of the diameter of the nanowire and on the contact angle with the PC material (see fig. 4 and 5).

In a further embodiment -not graphically shown in any figure-a nanotube (hollow nano wire) is used instead of a massive nanowire. With such a nanotube, for example when it is perpendicular mounted on the PC material, the contact area with the PC material can even be reduces below the resulting contact area of $\pi r^2$, resulting of the diameters of the nanowire dimensions named above, or even far below 1 nm$^2$.

If the nanotube is fabricated with porous walls, then the illumination area can be, by suitable incoupling the light into the nanotube, to the diameter of the hollow nanotube. In yet another embodiment -not shown in any figure here- the conductive nanotube or nanowire shows a light guiding element inside to deliver light to the PC material.

**References**

[1] S. Verghese, K. A. McIntosh, and E. R. Brown. Optical and terahertz power limits in the low-temperature-grown GaAs photomixers. Phys. Lett, 71:2743-2745, 1997.Appl Phys. Lett, 71:2743-2745,

[2] E. Peytavit, S. Arscott, D. Lippens, J. F. Lampin, L. Desplanque, F. Mollot, G. Mouret, S. Matton, P. Masselin, and R. Bocquet, Appl. Phys. Lett.81, 1174 2002.

[3] H. Hartnagel, A. Jain, A. Dawar, and C. Jagadish, , "Semiconducting Transparent Thin Films," London: IOP publishing Ltd 1995.

[4] Shuji Matsuura, Hiroshi Ito, Generation of CW Terahertz Radiation with Photomixing, Topics in Applied Physics, Springer Berlin, vol 97,pp 157-204, Jan 2005.

[5] L.Hu , Hui Wu , and Yi Cui, "Metal nanogrids, nanowires, and nanofi bers for transparent electrodes," Materials Research Society BULLETIN, vol 36 , pp. 760-7650ct. 2011.
[6] H.Tanoto, J. Tehng, Q. Wu, M. Sun, Z.Chen, S. Maier, B.Wang, C. Chum, G. Si, A. Danner, and S. Chua,"Greatly enhanced continuous-wave terahertz emission by nanoelectrodes in a photoconductive photo mixer, Nature Photonics,Vol 6, 2012.

## Claims

1. Vertical photomixer with a top contact, a photoconductive material and a bottom contact, where the photoconductive material is mounted in conductive contact with the bottom contact, **characterised in that**, the top contact is in conductive contact to a nanostructure, which itself is in contact with the photoconductive material.

2. Photomixer according to claim 1, **characterised in that**, the nanostructure is a nanogridstructure or nanononwovenstructure.

3. Photomixer according to claim 1 or 2, **characterised in that**, the nanostructure is a single nanowire.

4. Photomixer according to claim 1 to 2, **characterised in that**, the nanostructure is a single nanowire or nanotube, which is mounted aligned between the top contact and the photoconductive material.

5. Photomixer according to claim 1 to 2, **characterised in that**, the nanostructure is a single nanowire or nanotube, which is mounted perpendicular on the photoconductive material.

## Patentansprüche

1. Vertikaler Photomischer mit einem oberen Kontakt, einem photoleitenden Material und einem unteren Kontakt, wobei das photoleitende Material in leitendem Kontakt mit dem unteren Kontakt montiert ist, **dadurch gekennzeichnet, daß** der obere Kontakt in leitendem Kontakt zu einer Nanostruktur steht, die selbst in Kontakt mit dem photoleitenden Material steht.

2. Photomischer nach Anspruch 1, **dadurch gekennzeichnet, dass** die Nanostruktur eine 15 Nanogitterstruktur oder Nanononvliesstruktur ist.

3. Photomischer nach Anspruch 1 oder 2, **dadurch gekennzeichnet, dass** die Nanostruktur ein einzelner Nanodraht ist.

4. Photomischer nach Anspruch 1 bis 2, **dadurch gekennzeichnet, dass** die Nanostruktur ein einzelner Nanodraht oder Nanoröhrchen ist, der zwischen dem oberen Kontakt und dem photoleitenden Material ausgerichtet montiert ist.

5. Photomischer nach Anspruch 1 bis 2, **dadurch gekennzeichnet, dass** die Nanostruktur ein einzelner Nanodraht oder Nanoröhrchen ist, der senkrecht auf dem photoleitenden Material montiert ist.

## Revendications

1. Un mélangeur optique vertical ayant un contact supérieur, un matériau photoconducteur et un contact inférieur, dans lequel le matériau photoconducteur est monté en contact conducteur avec le contact inférieur, **caractérisé en ce que** le contact supérieur est en contact conducteur avec une nanostructure qui est elle-même en contact avec le matériau photoconducteur.

2. Le mélangeur optique selon la revendication 1, **caractérisé en ce que** la nanostructure est une structure nanogrid ou une structure nanogrid non tissée.

3. Le mélangeur optique selon les revendications 1 à 2, **caractérisé en ce que** la nanostructure est un nanofil unique.

4. Le mélangeur optique selon les revendications 1 à 2, **caractérisé en ce que** la nanostructure est un nanofil ou un nanotube unique, qui est monté en alignement entre le contact supérieur et le matériau photoconducteur.

5. Le mélangeur optique selon les revendications 1 à 2, **caractérisé en ce que** la nanostructure est un nanofil ou un nanotube unique, qui est monté perpendiculairement sur le matériau photoconducteur.

Fig. 1

Fig. 1 The DC characteristics for the vertically photomixer.

Fig. 2

**Figure 2**

Fig. 3

**Figure 3**

Fig. 4

Figure 4

Fig. 5

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. VERGHESE ; K. A. MCLNTOSH ; E. R. BROWN.** Optical and terahertz power limits in the low-temperature-grown GaAs photomixers. *Phys. Lett,* 1997, vol. 71, 2743-2745
- *Appl Phys. Lett,* vol. 71, 2743-2745
- **E. PEYTAVIT ; S. ARSCOTT ; D. LIPPENS ; J. F. LAMPIN ; L. DESPLANQUE ; F. MOLLOT ; G. MOURET ; S. MATTON ; P. MASSELIN ; R. BOCQUET.** *Appl. Phys. Lett.,* 2002, vol. 81, 1174
- **H. HARTNAGEL ; A. JAIN ; A. DAWAR ; C. JAGADISH.** Semiconducting Transparent Thin Films. IOP publishing Ltd, 1995

- Generation of CW Terahertz Radiation with Photomixing. **SHUJI MATSUURA ; HIROSHI ITO.** Topics in Applied Physics. Springer, January 2005, vol. 97, 157-204
- **L.HU ; HUI WU ; YI CUI.** Metal nanogrids, nanowires, and nanofi bers for transparent electrodes. *Materials Research Society BULLETIN,* 2011, vol. 36, 760-7650
- **H.TANOTO ; J. TEHNG ; Q. WU ; M. SUN ; Z.CHEN ; S. MAIER ; B.WANG ; C. CHUM ; G. SI ; A. DANNER.** Greatly enhanced continuous-wave terahertz emission by nanoelectrodes in a photoconductive photo mixer. *Nature Photonics,* 2012, vol. 6